# EUROPÄISCHE PATENTSCHRIFT

(11) **EP 0 747 727 B1**
(45) Veröffentlichungstag und Bekanntmachung des Hinweises auf die Patenterteilung: **18.09.2002**
(21) Anmeldenummer: 96106643.8
(22) Anmeldetag: 26.04.1996
(51) Int. Cl.: G01S 17/36

(54) **Verfahren und Vorrichtung zur Abstandsmessung**
Method and device for measuring distance
Méthode et dispositif de mesure de distance

(30) Priorität: 08.06.1995 DE 19520993
(43) Veröffentlichungstag der Anmeldung: 11.12.1996
(73) Patentinhaber: SICK AG, 79183 Waldkirch (DE)
(72) Erfinder: Hippenmeyer, Heinrich, 79348 Freiamt (DE); Pierenkemper, Hans-Werner, 79312 Emmendingen (DE)
(74) Vertreter: Manitz, Finsterwald & Partner

(56) Entgegenhaltungen:
- EP-A- 0 434 191
- EP-A- 0 652 530
- DE-A- 2 017 357
- FR-A- 2 601 145
- GB-A- 1 259 318
- US-A- 4 738 529

## Beschreibung

Die Erfindung betrifft ein Verfahren zur Erfassung des Abstands zwischen einer einen Sender und einen Empfänger aufweisenden Meßeinrichtung und einem Objekt, bei dem vom Sender ein moduliertes Signal, insbesondere ein Lichtsignal ausgesandt, dieses Signal vom Objekt reflektiert und das reflektierte Signal vom Empfänger empfangen und in der Meßeinrichtung ausgewertet wird, wobei das empfangene Signal gegenüber dem ausgesandten Signal eine von der Signallaufzeit über die Meßstrecke abhängige Phasenverschiebung erfährt, wobei ferner zumindest Sender, Meßstrekke, Empfänger und ein einen Phasengang aufweisender Filterbaustein einen Schwingkreis bilden, dessen von der Signallaufzeit über die Meßstrekke abhängige Schwingungsfrequenz dem ausgesandten modulierten Signal aufgeprägt wird, und wobei der zu erfassende Abstand aus der Frequenz bzw. der Periodendauer des Schwingkreises ermittelt wird.

Weiterhin betrifft die Erfindung eine Vorrichtung zur Durchführung eines solchen Verfahrens.

Bei bekannten Verfahren und Vorrichtungen zur Abstandserfassung wird die erwähnte Phasenverschiebung zwischen dem ausgesandten und dem empfangenen Signal dazu benutzt, den zu ermittelnden Abstand zu berechnen. Zu diesem Zweck muß der Absolutwert der aufgetretenen Phasenverschiebung bestimmt werden, was regelmäßig nur mit einem vergleichsweise hohen Aufwand möglich und somit der Wirtschaftlichkeit der bekannten Verfahren und Vorrichtungen abträglich ist.

Aus der EP 0 434 191 A2 ist ein Abstandsmeßsystem bekannt, bei dem ein Laser, eine optische Wegstrecke, ein Empfänger und ein Signalverarbeitungsweg zu dem Laser einen Schwingkreis bilden. Dadurch wird das Laserlicht mit einer derartigen Frequenz moduliert, daß entlang des Schwingkreises eine Phasenverschiebung von mindestens einer Periodenlänge auftritt. Der Schwingkreis enthält ein Bandpaßfilter, dessen Mittenfrequenz im Rahmen einer Suchlauffunktion zwischen zwei Grenzwerten variiert wird. Durch Beobachtung der dabei auftretenden Signalverstärkung wird die Resonanzfrequenz des Schwingkreises und hieraus der Abstand des reflektierenden Objekts ermittelt.

Die GB 1 259 318 A beschreibt ein elektromagnetisches Abstandsmeßgerät mit einem Modulator, einem Sender zum Aussenden einer modulierten elektromagnetischen Welle und einem Empfänger, der die modulierte Welle nach Reflektion an einem Objekt empfängt und ein entsprechendes Signal über einen Verstärker an den Modulator liefert. Auch hier bildet der Signalweg einen Schwingkreis, dessen Resonanzfrequenz von der Länge des Signalweges abhängt.

Aus der FR 2 601 145 A ist ein Abstandsmeßgerät bekannt, bei dem eine Laserdiode, eine optische Weglänge, ein Empfänger und ein mit der Laserdiode gekoppelter Verstärker einen Schwingkreis bilden, wobei der Verstärkungsgrad geregelt wird.

Aus der EP 0 652 530 A2 ist ein Laserscanner für Barcodes bekannt, der mehrere Sendeeinheiten aufweist, die auf unterschiediche Objektabstände fokussiert sind. Aus der Phasenverschiebung des amplitudenmodulierten Sendelichts wird die Distanz des Objekts bestimmt. In Abhängigkeit von der ermittelten Distanz wird über eine Wähleinrichtung jeweils eine der Sendeeinheiten aktiviert.

Eine Aufgabe der Erfindung besteht darin, ein Verfahren der eingangs beschriebenen Art so auszubilden, daß es mit geringstmöglichem Aufwand für weitere Anwendungsfälle durchführbar ist.

Erfindungsgemäß wird diese Aufgabe durch die Merkmale des Anspruchs 1 gelöst.

Bei Realisierung des erfindungsgemäßen Verfahrens wird ein Schwingkreis vorgesehen, dessen Resonanzfrequenz dem Sender der Meßeinrichtung aufgeprägt wird, wodurch schließlich eine Aussendung eines modulierten Signals, insbesondere eines modulierten Lichtsignals ausgelöst wird, dessen Modulationsfrequenz identisch mit der Resonanzfrequenz des Schwingkreises ist. Das empfangene Signal, das aufgrund der Signal- bzw. Lichtlaufzeit über die Meßstrecke gegenüber dem ausgesandten Signal eine Phasenverschiebung aufweist, wird zur Beaufschlagung des Filterbausteins verwendet, wodurch erreicht wird, daß sich die Resonanzfrequenz des Schwingkreises in Abhängigkeit von der aufgetretenen Phasenverschiebung verändert. Insofern stellt die Resonanzfrequenz des Schwingkreises ein Maß für den zu ermittelnden Abstand dar.

Sender, Meßstrecke, Empfänger und Filterbaustein bilden also ein geschlossenes rückgekoppeltes System, dessen Schwingungsfrequenz sich in Abhängigkeit von der Länge der Meßstrecke bzw. vom zu ermittelnden Abstand ändert.

Demzufolge wird es möglich, den zu ermittelnden Abstand letztlich mir sehr geringem Kostenaufwand durch eine einfache Frequenz- oder Periodendauermessung zu bestimmen, was im Vergleich zu der bisher verwendeten Phasenmessung mit deutlich geringerem Aufwand möglich ist. Somit wird ein Verfahren bereitgestellt, mit dem sich Abstandsmessungen mit geringem Aufwand durchführen lassen.

Erfindungsgemäß wird dieses Verfahren in einem Codeleser mit integrierter Autofokusfunktion verwendet. In diesem Fall kann das von dem den Code tragenden Objekt reflektierte und vom Empfänger empfangene Signal sowohl den Filterbaustein beaufschlagen als auch zur Codeerkennung herangezogen werden. Es sind in diesem Fall bei einem herkömmlichen Codeleser nur wenige zusätzliche Bauelemente, im wesentlichen lediglich der Filterbaustein und eine Baugruppe zur Frequenzbestimmung vorzusehen, da Sender und Empfänger des Codelesers bei Einsatz des erläuterten Abstandserfassungsverfahrens die beschriebene Doppelfunktion erfüllen können, gemäß der das von ihnen ausgesandte und empfangene Signal sowohl zur Beaufschlagung des Filterbausteins als auch zur Codeerkennung dient.
Bei Anwendung des erläuterten Abstandserfassungsverfahrens in einem Codeleser muß das empfangene Lichtsignal in zwei Komponenten aufgetrennt werden, von denen eine zur Ermittlung des Codes und die andere zur Ermittlung des Abstands herangezogen wird. Diese beiden Signalkomponenten befinden sich in unterschiedlichen Bandbereichen, so daß mittels geeigneter Filter ohne weiteres die erwähnte Auftrennung vorgenommen werden kann.

Bevorzugt ist der Filterbaustein so auszuführen, daß zumindest bei den systemrelevanten Signal- bzw. Lichtlaufzeiten ein linearer Meßbereich bzw. eine lineare Phasenkennlinie gegeben ist. In diesem Fall besteht eine direkte Proportionalität zwischen der Resonanzfrequenz des Schwingkreises und dem zu ermittelnden Abstand bzw. der Länge der Meßstrecke.

Es ist allerdings auch möglich, über eine Referenzmessung die Funktion der Schwingungsfrequenz über dem Objektabstand zu ermitteln, diese Funktion abzuspeichern und den Objektabstand letztendlich mittels dieser Funktion aus der Schwingungsfrequenz zu berechnen.

Bevorzugt weist der Filterbaustein eine besonders steil verlaufende Phasenkennlinie auf, da mit zunehmender Steilheit der Phasenkennlinie auch die bei der Abstandsmessung zu erzielende Auflösung erhöht wird.
In diesem Zusammenhang ist es sinnvoll, den Filterbaustein beispielsweise als Filter vierter bis achter Ordnung auszubilden.

Bei einer weiteren bevorzugten Ausführungsform des erfindungsgemäßen Verfahrens wird vor der Ermittlung der Frequenz bzw. der Periodendauer des Schwingkreises dessen Frequenz herabgemischt. Auf diese Weise ergibt sich eine zusätzliche Vereinfachung der durchzuführenden Messung, da die herabgemischte Frequenz mit einfacheren Mitteln bestimmbar ist als die tatsächliche Frequenz des Schwingkreises. Das Herabmischen der Resonanzfrequenz muß in diesem Fall durch Bauelemente realisiert werden, die außerhalb des erfindungsgemäßen geschlossenen Systems aus Sender, Meßstrecke, Empfänger und Filterbaustein angeordnet sind, so daß der Vorgang des Herabmischens keine Auswirkungen auf die im geschlossenen System existierenden Signale hat.

Vor der Durchführung eines Meßvorgangs zur Abstandsbestimmung kann regelmäßig eine Referenzmessung ausgelöst werden, bei welcher das Gesamtsystem beispielsweise auf einen dem halben Meßbereich entsprechenden Abstand geeicht wird. So lassen sich unerwünschte, die Meßergebnisse verfälschende Temperatur- und Alterungseinflüsse ausschalten.

Weitere bevorzugte Ausführungsformen des erfindungsgemäßen Verfahrens sowie eine Vorrichtung zur Durchführung des erfindungsgemäßen Verfahrens sind in den Unteransprüchen angegeben.

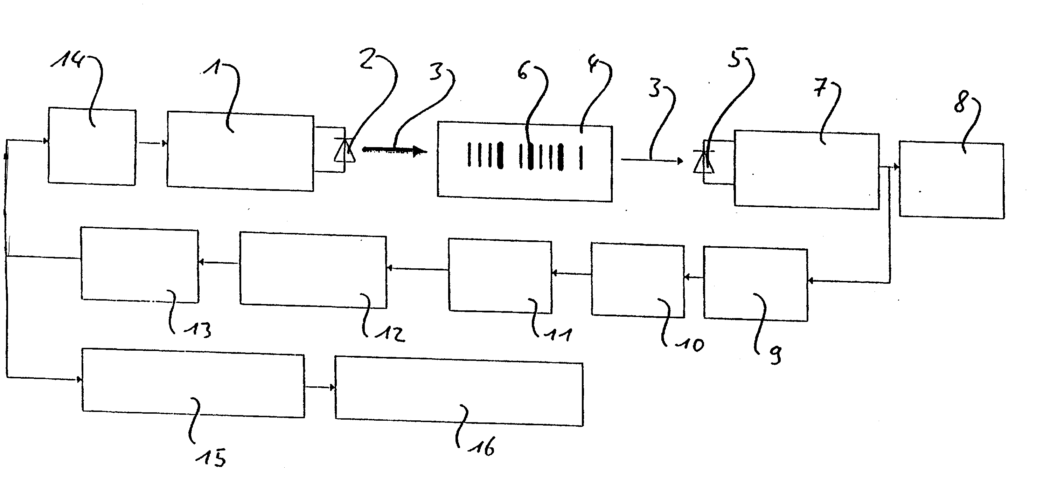

Die Erfindung wird nachfolgend anhand eines Ausführungsbeispiels unter Bezugnahme auf die einzige Figur beschrieben; diese zeigt ein Blockschaltbild einer Vorrichtung zur Durchführung des erfindungsgemäßen Verfahrens, welche in einen Codeleser mit Autofokusfunktion integriert ist.

Die in der Figur dargestellte Schaltung weist einen von einer Steuerschaltung 1 beaufschlagten Sender, insbesondere eine Laserdiode 2 auf, welche einen modulierten Lichtstrahl über eine Meßstrecke 3 aussendet, der von einem am Ende der Meßstrecke 3 angeordneten Objekt 4 reflektiert wird und auf diese Weise über die Meßstrecke 3 zu einem Empfänger, insbesondere einem Lichtempfänger 5 gelangt.

Das Objekt 4 ist mit einem Code 6 versehen, welcher von dem von der Laserdiode 2 ausgesandten Lichtstrahl abgetastet wird.

Das vom Lichtempfänger 5 erzeugte Signal wird einer Empfangsschaltung 7 zugeführt, deren Ausgangssignal zum einen eine Schaltung 8 zur Ermittlung des abzutastenden Codes 6 und andererseits eine aus mehreren Baugruppen bestehende Schaltung zur Bestimmung des Abstands zwischen Laserdiode 2 bzw. Lichtempfänger 5 und Objekt 4 beaufschlagt.

Das von der Empfangsschaltung 7 abgegebene Signal kann beispielsweise durch die Vorsehung entsprechender Bandpässe in zwei verschiedene Signale aufgeteilt werde, von denen eines zur Codebestimmung und das andere zur Abstandsbestimmung dient. Die Frequenzen des für die Codebestimmung geeigneten Signalanteils liegen in der Regel in einem unteren Bandbereich, während der zur Abstandsbestimmung geeignete Signalanteil beispielsweise in einem höheren Frequenzbereich liegen kann. Durch die Vorsehung entsprechender Filter können diese beiden Signalanteile auf einfache Weise aus dem Ausgangssignal der Empfangsschaltung 7 extrahiert werden.

Ein Filter bzw. Bandpaß 9 zur Extraktion des für die Abstandsbestimmung geeigneten Signals ist in dem in der Figur dargestellten Ausführungsbeispiel mit dem Ausgangssignal der Empfangsschaltung 7 beaufschlagt.

Das von diesem Bandpaß 9 gelieferte Signal wird einer Phasenkorrekturschaltung 10 zugeführt, welche so ausgelegt ist, daß sie den bandbegrenzenden bzw. phasenverschiebenden Einfluß der einzelnen Bauelemente der Gesamtschaltung kompensiert, so daß das am Ausgang der Phasenkorrekturschaltung 10 anliegende Signal gegenüber dem von der Laserdiode 2 ausgesandten Signal letztendlich im wesentlichen nur noch die durch die Lichtlaufzeit über die Meßstrecke 3 bedingte und den zu ermittelnden Abstand kennzeichnende Phasenverschiebung aufweist.

Darüberhinaus kann über die Phasenkorrekturschaltung 10 im Fertigungsprozess durch einen einfachen Abgleich dieser Schaltung eine Kalibrierung des Abstandsmeßgerätes, insbesondere auf den dem halben Meßbereich entsprechenden Abstand durchgeführt werden.

Der Ausgang der Phasenkorrekturschaltung 10 ist mit einem Verstärker 11 verbunden, dessen Ausgangssignal einen einen Phasengang aufweisenden Filterbaustein 12 beaufschlagt.

Das Ausgangssignal des Filterbausteins 12 wird einem nichtlinearen Verstärker 13 zugeführt, welcher insbesondere eine logarithmische Kennlinie aufweist und dazu dient, ein Ausgangssignal definierter Amplitude bereitzustellen, mit dem letztendlich die Steuerschaltung 1 zur Ansteuerung der Laserdiode 2 beaufschlagt werden kann. Auf diese Weise wird gewährleistet, daß die Amplitude des die Laserdiode 2 ansteuernden Signals unabhängig von der Amplitude des vom Lichtempfänger 5 gelieferten Signals ist.

Bezüglich der beiden Verstärker 11 und 13 ist erwähnenswert, daß diese auch an anderen Positionen im geschlossenen Kreis angeordnet werden können, wobei insbesondere auch die beiden Verstärkungsfunktionen der Verstärker 11 und 13 in einem einzelnen Verstärkerelement zusammenfaßbar sind.

Vorzugsweise ist zwischen den nichtlinearen Verstärker 13 und die Steuerschaltung 1 ein Korrekturnetzwerk 14 geschaltet, welches dem vom nichtlinearen Verstärker 13 gelieferten Signal eine Sinusform aufprägt, wodurch eine phasengenaue Ansteuerung der Steuerschaltung 1 sichergestellt ist.

Die beschriebenen Komponenten Laserdiode 2, Meßstrecke 3, Lichtempfänger 5, Empfangsschaltung 7, Bandpaß 9, Phasenkorrekturschaltung 10, Verstärker 11, Filterbaustein 12, nichtlinearer Verstärker 13, Korrekturnetzwerk 14 und Steuerschaltung 1 bilden ein geschlossenes, rückgekoppeltes System bzw. einen Schwingkreis, bei dem unterschiedliche Lichtlaufzeiten über die Meßstrecke 3 zu einer Phasenänderung des vom Lichtempfänger 5 gelieferten Signals führen, welche im Schwingkreis in eine Frequenzänderung umgesetzt wird.

Diese Frequenzänderung kann mit einem geringen Aufwand an elektronischen Bauelementen durch eine geeignete Auswerteschaltung 15 bestimmt werden, an deren Eingang das Ausgangssignal des nichtlinearen Verstärkers 13 angelegt wird. Die Auswerteschaltung 15, die kein Bestandteil des erwähnten geschlossenen Systems ist, kann entweder zur Frequenz- oder Periodendauerbestimmung des angelegten Eingangssignals dienen.

Da der Filterbaustein 12 - wie bereits erwähnt - vorzugsweise im linearen Bereich seiner Phasenkennlinie betrieben wird, findet eine direkte und proportionale Umsetzung einer Phasenverschiebung in eine Frequenzänderung statt. Da die Phasenverschiebung ein Maß für den zu ermittelnden Abstand bzw. für die Lichtlaufzeit über die Meßstrecke darstellt, läßt sich der zu bestimmende Abstand auf einfache Weise aus der Frequenz bzw. der Periodendauer des Schwingkreises ermitteln.

Zwischen dem nichtlinearen Verstärker 13 und der Auswerteschaltung 15 kann außerhalb des geschlossenen Systems zusätzlich eine Schaltung zur Herabmischung der Frequenz des Ausgangssignals des nichtlinearen Verstärkers 13 vorgesehen werden, wobei sich in diesem Fall die zu ermittelnde Frequenz mit noch geringerem Aufwand bestimmen läßt.

Die von der Auswerteschaltung 15 ermittelte Frequenz bzw. Periodendauer wird einer nachgeschalteten Berechnungsschaltung 16 zugeführt, welche aus der Frequenz bzw. der Periodendauer den zu ermittelnden Abstand zwischen Laserdiode 2 bzw. Lichtempfänger 5 und Objekt 4 berechnet.

Vorteilhaft an dem in der Zeichnung dargestellten Codeleser ist die Tatsache, daß Steuerschaltung 1, Laserdiode 2, Lichtempfänger 5 und Empfangsschaltung 7 sowohl zur Erzeugung eines für die Codeermittlung benötigten Signals als auch zur Erzeugung eines für die Abstandsermittlung benötigten Signals dienen, ohne daß diese Komponenten im Codeleser wie beim Stand der Technik zweifach ausgeführt sein müssen.

Die erwähnte und vorzugsweise vor jedem Meßvorgang durchzuführende Referenzmessung auf einen dem halben Meßbereich entsprechenden Abstand kann bei einem Codeleser beispielsweise durchgeführt werden, indem der ausgesandte Lichtstrahl mittels eines drehbaren Spiegelrades innerhalb des entstehenden V-förmigen Lesefeldes eine Referenzmarke abtastet, welche intern im Codeleser angebracht einen Bezugabstand definiert und demzufolge eine Basis für die Berechnung des externen Objektabstandes liefert. Auf diese Weise können Temperaturund Alterungseinflüsse ausgeschaltet werden.

### Bezugszeichenliste

- 1: Steuerschaltung
- 2: Laserdiode
- 3: Meßstrecke
- 4: Objekt
- 5: Lichtempfänger
- 6: Code
- 7: Empfangsschaltung
- 8: Schaltung zur Codeermittlung
- 9: Bandpaß
- 10: Phasenkorrekturschaltung
- 11: Verstärker
- 12: Filterbaustein
- 13: nichtlinearer Verstärker
- 14: Korrekturnetzwerk
- 15: Auswerteschaltung
- 16: Berechnungsschaltung

## Patentansprüche

1. Verfahren zur Erfassung des Abstands zwischen einer einen Sender (2) und einen Empfänger (5) aufweisenden Meßeinrichtung und einem Objekt (4), bei dem vom Sender (2) ein moduliertes Signal, insbesondere ein Lichtsignal ausgesandt, dieses Signal vom Objekt (4) reflektiert und das reflektierte Signal vom Empfänger (5) empfangen und in der Meßeinrichtung ausgewertet wird, wobei das empfangene Signal gegenüber dem ausgesandten Signal eine von der Signallaufzeit über die Meßstrecke (3) abhängige Phasenverschiebung erfährt,
wobei ferner zumindest Sender (2), Meßstrecke (3), Empfänger (5) und ein einen Phasengang aufweisender Filterbaustein (12) einen Schwingkreis bilden, dessen von der Signallaufzeit über die Meßstrecke abhängige Schwingungsfrequenz dem ausgesandten modulierten Signal aufgeprägt wird, und wobei der zu erfassende Abstand aus der Frequenz bzw. der Periodendauer des Schwingkreises ermittelt wird,
**dadurch gekennzeichnet,**
**daß** das Verfahren in einem Codeleser mit integrierter Autofokusfunktion verwendet wird, wobei das von dem den Code (6) tragenden Objekt (4) reflektierte und vom Empfänger (5) empfangene Signal sowohl den Filterbaustein (12) beaufschlagt als auch zur Codeerkennung herangezogen wird.

2. Verfahren nach Anspruch 1,
**dadurch gekennzeichnet,**
**daß** der Filterbaustein (12) im linearen Bereich seiner Phasenkennlinie betrieben wird, oder
**daß** über eine einmalige Referenzmessung die Funktion der Schwingungsfrequenz des Schwingkreises über dem Objektabstand ermittelt und die so erhaltene Funktion für jeden Meßvorgang herangezogen wird.

3. Verfahren nach einem der vorhergehenden Ansprüche,
**dadurch gekennzeichnet,**
**daß** das den Sender (2) beaufschlagende Signal zuvor insbesondere mittels eines nichtlinearen Verstärkers (13) verstärkt wird.

4. Verfahren nach einem der vorhergehenden Ansprüche,
**dadurch gekennzeichnet,**
**daß** dem den Sender (2) beaufschlagenden Signal zuvor eine Sinusform aufgeprägt wird.

5. Verfahren nach einem der vorhergehenden Ansprüche,
**dadurch gekennzeichnet,**
**daß** das empfangene Signal zwischen Empfänger (5) und Filterbaustein (12) eine Phasenkorrektur erfährt.

6. Verfahren nach einem der vorhergehenden Ansprüche,
**dadurch gekennzeichnet,**
**daß** vor Durchführung eines Meßvorgangs eine Referenzmessung, insbesondere auf einen dem halben Meßbereich entsprechenden Abstand, ausgelöst wird.

7. Verfahren nach einem der vorhergehenden Ansprüche,
**dadurch gekennzeichnet,**
**daß** vor der Ermittlung der Frequenz bzw. der Periodendauer des Schwingkreises dessen Frequenz herabgemischt wird.

8. Vorrichtung zur Erfassung des Abstands zwischen einer Meßeinrichtung und einem Objekt (4) mit einem ein moduliertes Signal in Richtung des Objekts (4) aussendenden Sender (2) und einem das vom Objekt (4) reflektierte Signal empfangenden Empfänger (5),
wobei ein zumindest aus Sender (2), Meßstrecke (3), Empfänger (5) und einem einen Phasengang aufweisenden Filterbaustein (12) gebildeter Schwingkreis vorgesehen ist,
wobei ferner der Sender (2) derart in den Schwingkreis integriert ist, daß dessen Modulationsfrequenz der von der Signallaufzeit über die Meßstrecke abhängigen Frequenz des Schwingkreises entspricht, und
wobei eine Auswerteschaltung (15, 16) zur Ermittlung des Abstands aus der Frequenz bzw. der Periodendauer des Schwingkreises vorgesehen ist,
**dadurch gekennzeichnet,**
**daß** die Vorrichtung in einen Codeleser mit integrierter Autofokusfunktion integriert ist, wobei das von dem den Code (6) tragenden Objekt (4) reflektierte und vom Empfänger (5) empfangene Signal sowohl zur Beaufschlagung des Filterbausteins (12) vorgesehen ist als auch zur Codeerkennung heranziehbar ist.

9. Vorrichtung nach Anspruch 8,
**dadurch gekennzeichnet,**
**daß** der Filterbaustein (12) zumindest bereichsweise eine lineare Phasenkennlinie aufweist.

10. Vorrichtung nach einem der Ansprüche 8 oder 9,
**dadurch gekennzeichnet,**
**daß** der Filterbaustein (12) eine steil verlaufende Phasenkennlinie aufweist, und/oder
**daß** der Filterbaustein (12) als Filter vierter bis achter Ordnung ausgebildet ist.

11. Vorrichtung nach einem der Ansprüche 8 bis 10,
**dadurch gekennzeichnet,**
**daß** zwischen Empfänger (5) und Filterbaustein (12) ein Verstärker, insbesondere mit nichtlinearer bzw. logarithmischer Kennlinie vorgesehen ist, und/oder
**daß** zwischen Filterbaustein (12) und Sender (2) ein Verstärker (13), insbesondere mit nichtlinearer bzw. logarithmischer Kennlinie vorgesehen ist.

12. Vorrichtung nach einem der Ansprüche 8 bis 11,
**dadurch gekennzeichnet,**
**daß** zwischen Filterbaustein (12) und Sender (2) bzw. zwischen Verstärker (13) und Sender (2) ein Korrekturnetzwerk (14) zur Sinusformung vorgesehen ist.

13. Vorrichtung nach einem der Ansprüche 8 bis 12
**dadurch gekennzeichnet,**
**daß** zwischen Empfänger (5) und Filterbaustein (12) ein Phasenkorrekturfilter (10) vorgesehen ist.

14. Vorrichtung nach einem der Ansprüche 8 bis 13,
**dadurch gekennzeichnet,**
**daß** die Auswerteschaltung (15, 16) eine Frequenzmischstufe zur Herabmischung der Frequenz des Schwingkreises umfaßt.

15. Codeleser mit integrierter Autofokusfunktion, **gekennzeichnet durch** die Merkmale eines der Ansprüche 8 bis 14.

## Claims

1. A method of detecting the distance between a measurement device, having a transmitter (2) and a receiver (5), and an object (4),
wherein a modulated signal, in particular a light signal, is transmitted by the transmitter (2), this signal is reflected by the object (4) and the reflected signal is received by the receiver (5) and evaluated in the measurement device, with the received signal undergoing a phase displacement relative to the transmitted signal dependent on the signal transit time over the measurement path (3), wherein at least the transmitter (2), the measurement path (3), the receiver (5) and a filter component (12) having a phase shift, form an oscillating circuit, the oscillating frequency of which depends on the signal transit time over the measurement path and is impressed on the transmitted modulated signal, and wherein the distance to be detected is determined from the frequency or the duration of a cycle of the oscillating circuit,
**characterised in that**
the method is used in a code reader with an integrated auto-focus function, wherein the signal reflected by the object (4) carrying the code (6) and received by the receiver (5) both acts on the filter component (12) and is also used for the code recognition.

2. A method in accordance with claim 1, **characterised in that** the filter component (12) is operated in the linear region of its phase characteristic; or **in that** the function of the oscillating frequency of the oscillating circuit relative to the object spacing is determined via a single reference measurement and the thus obtained function is used for each measurement process.

3. A method in accordance with any one of the preceding claims, **characterised in that** the signal which acts on the transmitter (2) has previously been amplified, in particular by means of a non-linear amplifier (13).

4. A method in accordance with any one of the preceding claims, **characterised in that** a sinusoidal shape is impressed on the signal before it acts on the transmitter (2).

5. A method in accordance with any one of the preceding claims, **characterised in that** the received signal undergoes a phase correction between the receiver (5) and the filter component (12).

6. A method in accordance with any one of the preceding claims, **characterised in that** a reference measurement is initiated, in particular over a distance which corresponds to half the measurement range, prior to carrying out a measurement process.

7. A method in accordance with any one of the preceding claims, **characterised in that** prior to determining the frequency or the duration of a cycle of the oscillating circuit, its frequency is stepped down by mixing.

8. An apparatus for detecting the distance between a measurement device and an object (4) with a transmitter (2) which transmits a modulated signal in the direction of the object (4) and with a receiver (5) which receives the signal reflected from the object (4),
wherein an oscillating circuit is provided which is formed at least by the transmitter (2), the measurement path (3), the receiver (5) and a filter component (12) having a phase shift,
wherein further the transmitter (2) is integrated into the oscillating circuit in such a way that its modulation frequency corresponds to the frequency of the oscillating circuit which depends on the signal transit time over the measurement path, and
wherein an evaluation circuit (15, 16) is provided for determining the distance from the frequency or from the duration of a cycle of the oscillating circuit,
**characterized in that** the apparatus is integrated in a code reader with an integrated auto-focus function, wherein the signal reflected by the object (4) carrying the code (6) and received by the receiver (5) is provided both to act on the filter component (12) and can also be used for the code recognition.

9. An apparatus in accordance with claim 8, **characterised in that** the filter component (12) has a linear phase characteristic, at least regionally.

10. An apparatus in accordance with one of the claims 8 or 9, **characterised in that** the filter component (12) has a steeply extending phase characteristic; and/or **in that** the filter component (12) is formed as a filter of the fourth to eighth order.

11. An apparatus in accordance with any one of claims 8 to 10, **characterised in that** an amplifier, in particular with a non-linear or logarithmic characteristic, is provided between the receiver (5) and the filter component (12); and/or **in that** an amplifier (13), in particular an amplifier with a non-linear or logarithmic characteristic, is provided between the filter component (12) and the transmitter (2).

12. An apparatus in accordance with any one of claims 8 to 11, **characterised in that** a correction network (14) for the formation of a sine wave is provided between the filter component (12) and the transmitter (2), or between the amplifier (13) and the transmitter (2).

13. An apparatus in accordance with any one of claims 8 to 12, **characterised in that** a phase correction filter (10) is provided between the receiver (5) and the filter component (12).

14. An apparatus in accordance with any one of claims 8 to 13, **characterised in that** the evaluation circuit (15, 16) has a frequency mixing stage for the step-down mixing of the frequency of the oscillating circuit.

15. A code reader having an integrated auto-focus function, **characterised by** the features of any one of claims 8 to 14.

## Revendications

1. Procédé de saisie de la distance entre un dispositif de mesure présentant un émetteur (2) et un récepteur (5) et un objet (4), où un signal modulé, notamment un signal lumineux, est envoyé par l'émetteur (2), ce signal est réfléchi par l'objet (4) et le signal réfléchi est reçu par le récepteur (5) et analysé dans le dispositif de mesure, dans lequel le signal reçu subit par rapport au signal envoyé un déphasage fonction du temps de propagation du signal sur le trajet de mesure (3), tandis qu'en outre au moins l'émetteur (2), le trajet de mesure (3), le récepteur (5) et un module filtrant (12) présentant une caractéristique de phase forment un circuit oscillant, dont la fréquence d'oscillation dépendant du temps de propagation du signal sur le trajet de mesure est imprégnée sur le signal modulé envoyé, et où la distance à mesurer est déterminée à partir de la fréquence ou de la durée de période du circuit oscillant, **caractérisé en ce que** le procédé est utilisé dans un lecteur de codes à fonction intégrée d'auto-focalisation, tandis que le signal réfléchi par l'objet (4) portant le code (6) et reçu par le récepteur (5) est appliqué sur le module filtrant (12) et également utilisé pour identifier le code.

2. Procédé selon la revendication 1, **caractérisé en ce que** le module filtrant (12) est exploité dans la plage linéaire de sa caractéristique de phase, ou **en ce que** par une mesure de référence unique la fonction de la fréquence d'oscillation du circuit oscillant est déterminée à l'aide de la distance de l'objet et la fonction ainsi obtenue est utilisée pour chaque opération de mesure.

3. Procédé selon l'une quelconque des revendications précédentes, **caractérisé en ce que** le signal appliqué sur l'émetteur (2) est préalablement amplifié à l'aide d'un amplificateur (13) non linéaire.

4. Procédé selon l'une quelconque des revendications précédentes, **caractérisé en ce que** le signal appliqué sur l'émetteur (2) est préalablement imprégné d'une forme sinusoïdale.

5. Procédé selon l'une quelconque des revendications précédentes, **caractérisé en ce que** le signal reçu subit une correction de phase entre le récepteur (5) et le module filtrant (12).

6. Procédé selon l'une quelconque des revendications précédentes, **caractérisé en ce qu'**avant la réalisation d'une opération de mesure est déclenchée une mesure de référence, notamment sur une distance correspondant à la moitié de la plage de mesure.

7. Procédé selon l'une quelconque des revendications précédentes, **caractérisé en ce qu'**avant la détermination de la fréquence ou de la durée de période du circuit oscillant la fréquence de ce dernier est démultipliée.

8. Dispositif de mesure de distance entre un dispositif de mesure et un objet (4), comprenant un émetteur envoyant un signal modulé en direction de l'objet (4) et un récepteur (5) recevant le signal réfléchi par l'objet (4), dans lequel un circuit oscillant est constitué par au moins l'émetteur (2), le trajet de mesure (3), le récepteur (5) et un module filtrant (12) présentant une caractéristique de phase, dans lequel en outre l'émetteur (2) est intégré dans le circuit oscillant de telle sorte que la fréquence de modulation de celui-ci corresponde à la fréquence du circuit oscillant dépendant du temps de propagation du signal sur le trajet de mesure, et dans lequel un circuit d'évaluation (15, 16) est prévu pour déterminer la distance à partir de la fréquence ou de la durée de période du circuit oscillant, **caractérisé en ce que** le dispositif est intégré dans un lecteur de codes à fonction intégrée d'autofocalisation, dans lequel le signal réfléchi par l'objet (4) portant le code (6) et reçu par le récepteur (5) est prévu aussi bien pour application sur le module filtrant (12) que pour l'identification du code.

9. Dispositif selon la revendication 8, **caractérisé en ce que** le module filtrant (12) du moins dans certaines zones présente une caractéristique de phase linéaire.

10. Dispositif selon l'une quelconque des revendications 8 ou 9, **caractérisé en ce que** le module filtrant (12) présente une caractéristique de phase à forte pente, et/ou **en ce que** le module filtrant (12) forme un filtre du quatrième à huitième ordre.

11. Dispositif selon l'une quelconque des revendications 8 à 10, **caractérisé en ce qu'**entre le récepteur (5) et le module filtrant (12) un amplificateur, notamment avec une caractéristique non linéaire ou logarithmique est prévu, et/ou **en ce qu'**entre le module filtrant (12) et l'émetteur (2) un amplificateur (13), notamment avec une caractéristique non linéaire ou logarithmique est prévu.

12. Dispositif selon l'une quelconque des revendications 8 à 11, **caractérisé en ce qu'**entre le module filtrant (12) et l'émetteur (2) ou entre l'amplificateur (13) et l'émetteur (2) un réseau de correction (14) est prévu pour la formation de sinusoïdes.

13. Dispositif selon l'une quelconque des revendications 8 à 12, **caractérisé en ce qu'**entre le récepteur (5) et le module filtrant (12) un filtre de correction de phase (10) est prévu.

14. Dispositif selon l'une quelconque des revendications 8 à 13, **caractérisé en ce que** le circuit d'évaluation (15, 16) comprend un étage mélangeur de fréquences pour abaisser la fréquence du circuit oscillant.

15. Lecteur de codes à fonction intégrée d'auto-focalisation, **caractérisé par** les caractéristiques de l'une quelconque des revendications 8 à 14.
